# EUROPÄISCHE PATENTSCHRIFT

(11) **EP 0 968 126 B1**
(45) Veröffentlichungstag und Bekanntmachung des Hinweises auf die Patenterteilung: **14.11.2001**
(21) Anmeldenummer: 98904060.5
(22) Anmeldetag: 13.01.1998
(51) Int. Cl.: B65G 54/02

(54) **ANTRIEBSVORRICHTUNG**
DRIVING DEVICE
DISPOSITIF D'ENTRAINEMENT

(30) Priorität: 17.03.1997 DE 19710790
(43) Veröffentlichungstag der Anmeldung: 05.01.2000
(73) Patentinhaber: FESTO AG & Co, 73734 Esslingen (DE)
(72) Erfinder: STOLL, Kurt, D-73732 Esslingen (DE); MAICHL, Martin, D-73084 Salach (DE); HASLINGER, Maximilian, D-70597 Stuttgart (DE); Reininger, Thomas, D-73249 Wernau (DE)
(74) Vertreter: Abel, Martin, Dipl.-Ing.
(86) Internationale Anmeldenummer: EP9800153
(87) Internationale Veröffentlichungsnummer: WO9841462

(56) Entgegenhaltungen:
- US-A- 3 882 791

## Beschreibung

Die Erfindung betrifft eine Antriebsvorrichtung, mit einem rohrförmigen Gehäuse, an dem eine längsbewegliche Bewegungseinheit angeordnet ist, die ein im Innern des Gehäuses befindliches Innenteil und ein mit diesem durch eine mindestens eine permanentmagnetische Magneteinrichtung aufweisende Kopplungseinrichtung magnetisch bewegungsgekoppeltes, außen am Gehäuse angeordnetes Außenteil aufweist.

Antriebsvorrichtungen dieser Art, die in Gestalt sogenannter kolbenstangenloser Arbeitszylinder ausgebildet sind, gehen beispielsweise aus der EP 0 603 471 A1, der DE-GM 1 982 379, der DE 29 22 444 C2, der DE-GM 82 30 298, der DE-AS 22 07 126 oder aus der US-A-3 882 791 hervor. Ihr Innenteil ist als fluidisch in Längsrichtung des Gehäuses antreibbares kolbenartiges Antriebsteil ausgeführt, dessen Bewegung durch die magnetische Kopplung synchron auf das Außenteil übertragen wird, das mit einem zu bewegenden Gegenstand verbindbar ist. Die Kopplungseinrichtung umfaßt jeweils innere und äußere Magneteinrichtungen, die sich aus permanentmagnetischen Formteilen zusammensetzen, welche axial oder radial polarisiert sind und Magnetkreise erzeugen, die die Wand des Gehäuses an einer oder mehreren Stellen des Umfanges durchsetzen.

Die bekannten Antriebsvorrichtungen verfügen zwar über eine ausgereifte und zuverlässige Technik, doch sind die Herstellungskosten relativ hoch. Auch sind der Verringerung der Baugröße durch die zur Gewährleistung einer ausreichenden magnetischen Kopplungskraft erforderlichen Mindestabmessungen der eingesetzten Permanentmagnete Grenzen gesetzt.

Die Druckschrift US-A-3 882 791, Grundlage für den Oberbegriff des Anspruchs 1, zeigt eine Antriebsvorrichtung, die ein Kolbenartiges Innenteil aus ferromagnetischen Material und ein bügelartiges Außenteil aufweist, das einen permanentmagneten beinhaltet, der mit dem Innenteil zusammen.

Es ist daher die Aufgabe der vorliegenden Erfindung, eine Antriebsvorrichtung der eingangs genannten Art zu schaffen, die bei kostengünstiger Herstellung und kompakten Abmessungen hohe magnetische Kopplungskräfte aufweist.

Zur Lösung dieser Aufgabe ist vorgesehen, daß in dem mindestens einen geschlossenen Magnetkreis eine am Innenteil angeordnete permanentmagnetische innere Magneteinrichtung vorgeschen ist.

Während beim Stand der Technik die von der Kopplungseinrichtung erzeugten Magnetkreise das Gehäuse und das Innenteil stets nur teilweise durchsetzen und auf Zonen beschränkt sind, die sich um das Zentrum des Gehäuses herum erstrecken, liegt nunmehr eine Kopplungseinrichtung vor, die mindestens einen und bei Bedarf auch mehrere Magnetkreise erzeugt, die das Gehäuse und das Innenteil 1 quer zur Längserstreckung vollständig durchsetzen, so daß praktisch ein diametraler Durchgang eines Abschnittes des Magnetkreises durch das Gehäuse und das Innenteil vorliegt. Es hat sich gezeigt, daß bei einer derartigen Anordnung die eingesetzten Permanentmagnete in erheblich besseren Arbeitspunkten betrieben werden, so daß größere Kopplungskräfte vorliegen, die eine Verringerung des Magnetvolumens und somit der gesamten Bewegungseinheit ermöglichen. Es sind darüber hinaus Magneteinrichtungen mit einfacher Geometrie verwendbar, was die Herstellungskosten verringert.

Vorteilhafte Weiterbildungen der Erfindung sind in den Unteransprüchen aufgeführt.

Es ist möglich, die Kopplungseinrichtung so auszubilden, daß wirkt, so daß ein geschlossener, das Innenteil vollständig durchsetzender Magnetkreis erzeugt wird. Bei dieser Ausgestaltung können sich aber nicht sehr hohe magnetische Kopplungskräfte engeben. mindestens ein von ihr erzeugter Magnetkreis das Innenteil und das Gehäuse nur einmal durchquert, wobei die Rückführung außen um einen Teilumfang des Gehäuses herum über das mit Bestandteilen der Kopplungseinrichtung versehene Außenteil erfolgt. Unter anderem in diesem Zusammenhang ist es sinnvoll, das Außenteil mit einem den verlustarmen Rückschluß des Magnetkreises gewährleistenden weichmagnetischen Rückschlußteil zu versehen, das sich in Umfangsrichtung wenigstens teilweise um das Gehäuse herum erstreckt. Hier bietet sich insbesondere ein bügelartig ausgebildetes Rückschlußteil an, wobei zweckmäßigerweise das gesamte Außenteil bügelartig mit U-ähnlichem Querschnitt ausgebildet ist, so daß sich dieses sehr bequem von einer Längsseite des Gehäuses her an das Gehäuse ansetzen und gleichzeitig mit dem Innenteil magnetisch koppeln läßt. Damit ergibt sich bei der Montage eine besonders einfache Handhabung.

Die Kopplungseinrichtung kann auch so ausgebildet sein, daß mindestens ein von ihr erzeugter Magnetkreis das Innenteil und das Gehäuse zweimal durchquert, so daß also auch der Rückschluß des Magnetkreises durch das Gehäuse hindurch erfolgt, allerdings mit entgegengesetzter Flußrichtung. Auch hier trägt wiederum das Außenteil zweckmäßigerweise zum Schließen des Magnetkreises bei, wobei es von Vorteil ist, wenn das Außenteil an den entsprechenden Längsseiten des Gehäuses mit im Magnetkreis angeordneten weichmagnetischen Flußleitkörpern ausgestattet ist.

Vorzugsweise verfügt die Kopplungseinrichtung über mehrere in Längsrichtung aufeinanderfolgend angeordnete Kopplungseinheiten, die über miteinander kooperierende innere und äußere Magneteinrichtungen verfügen. Hier ist es auf einfache Weise möglich, durch Änderung der Anzahl der Kopplungseinheiten die gewünschte magnetische Kopplungskraft einzustellen.

Es ist besonders vorteilhaft, jede vorhandene innere Magneteinrichtung mit zwei inneren, insbesondere platten- oder stabartigen Magneteinheiten auszustatten, die rechtwinkelig zur Längsrichtung des Innenteils nebeneinander angeordnet sind und zur Mitwirkung bei der Erzeugung des Magnetkreises gleichgerichtet polarisiert sind. Diese beiden Magneteinheiten können von der Längsseite her in einander gegenüberliegende Taschen eines Magnetträgers des Innenteils eingesetzt werden, wobei sie sich auf Grund der gewählten Polarisierung gegenseitig anziehen. Sieht man dann noch zwischen den Magneteinheiten mit dem inneren Magnetträger fest verbundene Abstandshaltemittel vor, erfolgt eine selbsttätige Fixierung der Magneteinheiten an dem inneren Magnetträger in seiner Querrichtung. Auf aufwendige Maßnahmen zur Befestigung der Magneteinheiten kann dann verzichtet werden. Der Zwischenraum zwischen den Magneteinheiten kann bei Bedarf noch mit einem weichmagnetischen Flußleitstück bestückt sein, so daß ein starkes Magnetfeld gewährleistet ist.

Ein weiterer Vorteil der Antriebsvorrichtung besteht darin, daß sie die Verwirklichung verschiedenster Querschnittsformen des rohrförmigen Gehäuses ermöglicht. Kreisrunde Querschnittsformen sind ebenso möglich wie zum Erhalt einer Verdrehsicherung von der Kreisform abweichende Gestaltungen, beispielsweise ovale und hierbei insbesondere elliptische Querschnitte oder längliche Flachquerschnitte mit ebenen Längsseiten und bogenförmig abgerundeten Schmalseiten.

Nachfolgend wird die Erfindung anhand der beiliegenden Zeichnung näher erläutert. In dieser zeigen:
- Fig. 1: eine bevorzugte erste Bauform der Antriebsvorrichtung in Gestalt eines fluidbetätigten kolbenstangenlosen Arbeitszylinders im Querschnitt gemäß Schnittlinie I-I aus Fig. 2,
- Fig. 2: einen Längsschnitt durch die Antriebsvorrichtung aus Fig. 1 gemäß Schnittlinie II-II,
- Fig. 3: einen Längsschnitt durch das Innenteil der Antriebsvorrichtung gemäß Schnittlinie III-III aus Fig. 2,
- Fig. 4: eine weitere Ausführungsform der Antriebsvorrichtung in einer der Fig. 2 entsprechenden Längsschnittdarstellung mit von der Bauform gemäß Fig. 1 bis 3 abweichender Polarisierungsrichtung einzelner Kopplungseinheiten,
- Fig. 5: einen Querschnitt durch eine weitere mögliche Bauform der Antriebsvorrichtung und
- Fig. 6: ebenfalls einen Querschnitt durch eine weitere Ausführungsform der Antriebsvorrichtung, wobei strichpunktiert ergänzend eine Alternativbauform angedeutet ist.

Die in der Zeichnung dargestellten Ausführungsformen der erfindungsgemäßen Antriebsvorrichtung 1 dienen zur Bewegung von Gegenständen beliebiger Art und sind als kolbenstangenlose Arbeitszylinder ausgebildet, die fluidisch und hierbei insbesondere pneumatisch betätigt werden.

Die Antriebsvorrichtung verfügt über ein rohrähnliches Gehäuse 2, das bei den Ausführungsbeispielen ein Zylinderrohr bildet und an beiden Stirnseiten durch nicht näher gezeigte Abschlußwände verschlossen ist. Das Gehäuse 2 hat bevorzugt lineare Ausdehnung, wobei die Längsachse bzw. die Richtung der Längserstreckung strichpunktiert bei 3 angedeutet ist. Um Kurvenfahrten zu ermöglichen, könnte das Gehäuse 2 auch über gebogene Längenabschnitte verfügen.

An dem Gehäuse 2 ist eine in Richtung der Längsachse 3 hin und her bewegbare Bewegungseinheit 4 angeordnet. Diese umfaßt ein beim Ausführungsbeispiel als Antriebsteil wirkendes Innenteil 5 und ein als Abtriebsteil wirkendes Außenteil 6. Das Innenteil 5 ist im Innenraum 7 des Gehäuses 3 längsbeweglich geführt aufgenommen. Es ist bei den Ausführungsbeispielen als Kolben ausgeführt und unterteilt den Innenraum 7 unter Abdichtung axial in zwei Arbeitsräume 8, 8', die in an sich bekannter Weise abwechselnd mit einem fluidischen Druckmedium beaufschlagbar sind, um das Innenteil 5 zu einer Antriebsbewegung in Richtung der Längsachse 3 anzutreiben. Alternativ wäre auch ein elektrischer Antrieb des Innenteils 5 denkbar, wobei sich dann eine fluiddichte Abtrennung der beiden Arbeitsräume 8, 8' erübrigen würde.

Das Außenteil 6 befindet sich außerhalb des Gehäuses 2 im Bereich dessen Außenumfanges. Es ist beim Ausführungsbeispiel unmittelbar an dem Gehäuse 2 längsbeweglich geführt. Seine axiale Baulänge entspricht im wesentlichen derjenigen des Innenteils 5, und auch die Längspositionen des Innenteils 5 und des Außenteils 6 sind zweckmäßigerweise identisch. Das Innenteil 5 wird von dem Außenteil 6 unter Zwischenschaltung des Gehäuses 2 je nach Ausführungsform ganz oder teilweise umgriffen.

Dem Innenteil 5 und dem Außenteil 6 ist gemeinsam eine Kopplungseinrichtung 12 zugeordnet, die mit einer noch näher zu erläuternden permanentmagnetischen Magnetanordnung ausgestattet ist und durch Magnetkraft eine berührungslose Bewegungskopplung zumindest in Richtung der Längserstreckung 3 zwischen Innenteil 5 und Außenteil 6 hervorruft. Auf diese Weise ergibt sich die aus diesen Teilen zusammengesetzte, in sich praktisch starre Bewegungseinheit 4. Wird das Innenteil 5 axial verlagert, so bewegt sich das Außenteil 6 mit. Auf 5diese Weise kann ein mit dem Abtriebsteil 5 verbundener Gegenstand oder eine Last transportiert werden. Auch ein umgekehrter Einsatz, bei dem das Außenteil 6 als Antriebsteil und das Innenteil 5 als Abtriebsteil fungiert, wäre denkbar, beispielsweise bei einer Anwendung als Flüssigkeitspumpe.

Eine Besonderheit der Antriebsvorrichtung 1 liegt darin, daß die Kopplungseinrichtung 12 derart angeordnet und ausgebildet ist, daß sie mindestens einen das Innenteil 5 und das Gehäuse 2 vollständig durchquerenden und über das Außenteil 6 geschlossenen Magnetkreis 13 erzeugt. Ein Längenabschnitt dieses Magnetkreises 13 durchsetzt diametral das Innenteil 5 und zwei einander diametral gegenüberliegende Wandabschnitte 14, 14' des Gehäuses 2. Es hat sich gezeigt, daß bei einer derartigen Ausgestaltung schon mit geringem Volumen der Magnetanordnung hohe magnetische Kopplungskräfte zwischen dem Innenteil 5 und dem Außenteil 6 erzielbar sind, was die Realisierung kompakter und kostengünstiger Antriebsvorrichtungen ermöglicht.

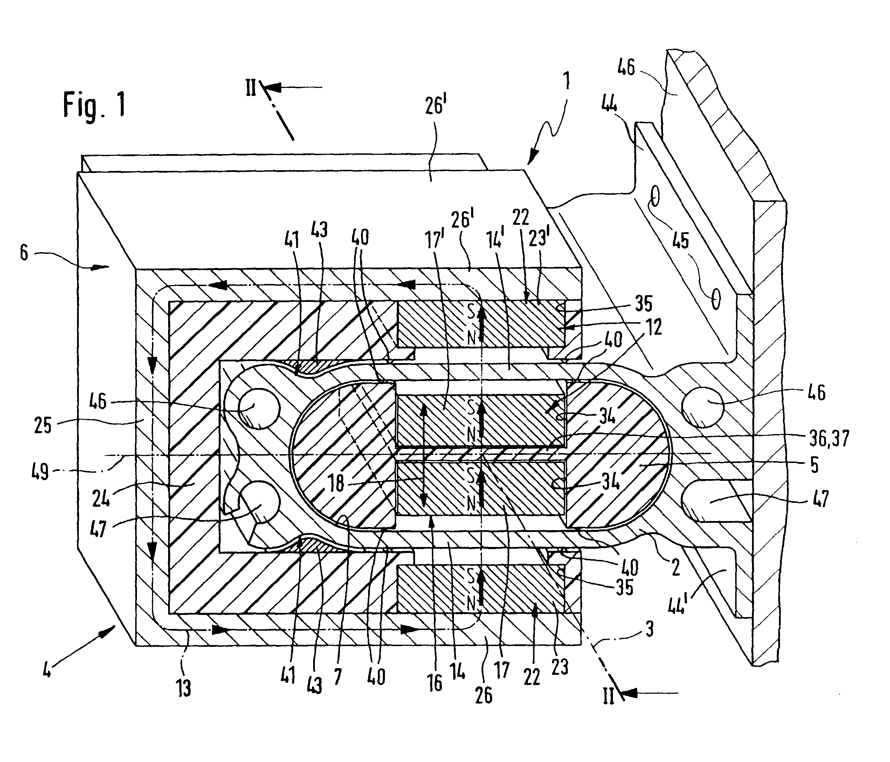

Anhand der Fig. 1 bis 3 sei zunächst eine bevorzugte Ausführungsform der Antriebsvorrichtung 1 näher erläutert.

Das rohrförmige Gehäuse 2 besteht aus unmagnetischem und nicht magnetisierbarem Material, vorzugsweise Aluminiummaterial, und ist zweckmäßigerweise als Strangpreßteil ausgeführt. Sein Innenraum hat einen von der Kreisform abweichenden Querschnitt mit länglicher Gestalt, wobei zwei den vorerwähnten Wandabschnitten 14, 14' zugeordnete ebene Längsseiten und bogenförmig gekrümmte Schmalseiten vorhanden sind. Das komplementär konturierte Innenteil 5 ist somit bezüglich des Gehäuses 2 verdrehgesichert.

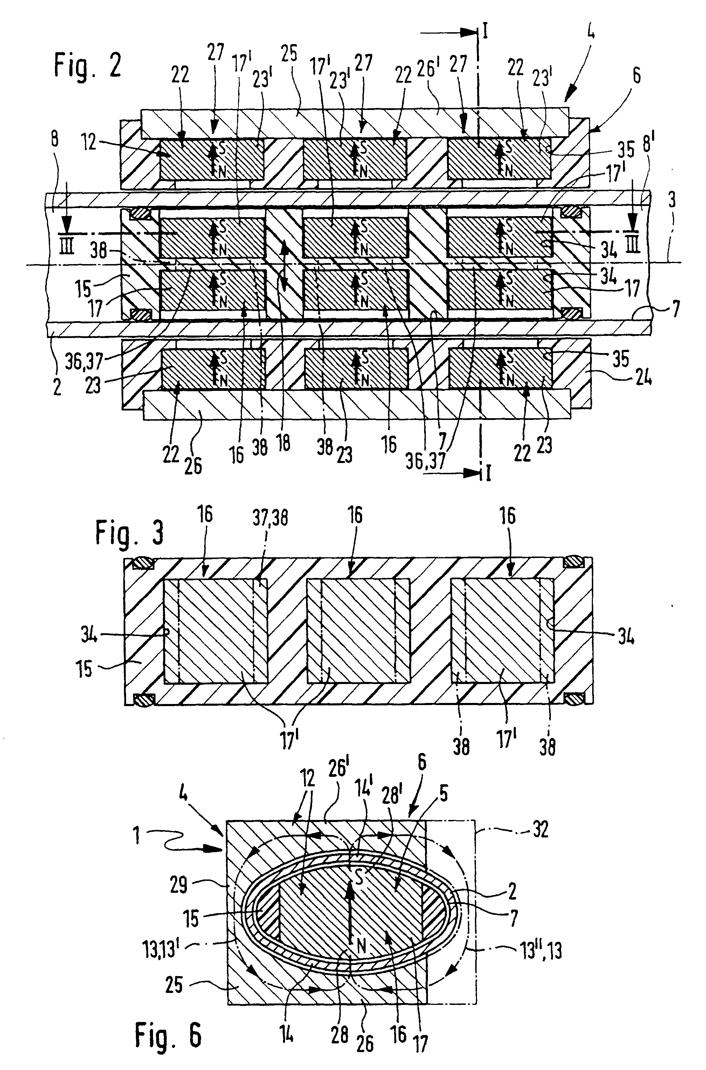

Das Innenteil 5 verfügt über einen länglichen inneren Magnetträger 15, der aus unmagnetischem, nicht magnetisierbarem Material besteht, beispielsweise aus Kunststoffmaterial. Er dient als Träger für mindestens eine und beim Ausführungsbeispiel drei in Längsrichtung 3 des Innenteils 5 mit Abstand aufeinanderfolgend angeordnete permanentmagnetische innere Magneteinrichtungen 16. Jede dieser inneren Magneteinrichtungen 16 umfaßt zwei rechtwinkelig zur Längserstreckung 3 des Innenteils 5 nebeneinanderliegend angeordnete permanentmagnetische innere Magneteinheiten 17, 17'. Diese sind stabähnlich oder, wie aus Fig. 3 hervorgeht, plattenartig ausgebildet, wobei ihre Plattenebenen parallel zu den beispielsgemäß ebenfalls parallel zueinander verlaufenden streifenartigen Wandabschnitten 14, 14' des Gehäuses 2 ausgerichtet sind. Ihre Polarisierung verläuft rechtwinkelig zur Plattenebene und somit quer und insbesondere rechtwinkelig zur Längsachse 3, wobei diese Querrichtung durch Doppelpfeil 18 veranschaulicht ist. Die inneren Magneteinheiten 17, 17' jeder inneren Magneteinrichtung 16 sind mit gleichgerichteter Polarisierung angeordnet, wobei die Polarisationsrichtung in der Zeichnung durch Pfeile verdeutlicht ist.

Am Außenteil 6 ist eine zweckmäßigerweise der Anzahl der inneren Magneteinrichtungen 16 entsprechende Anzahl permanentmagnetischer äußerer Magneteinrichtungen 22 vorgesehen. Die axiale Verteilung der äußeren Magneteinrichtungen 22 entspricht derjenigen der inneren Magneteinrichtungen 16, so daß sich in gleicher Längsposition befindliche Paare innerer und äußerer Magneteinrichtungen 16, 22 ergeben.

Jede äußere Magneteinrichtung 22 verfügt zweckmäßigerweise über zwei permanentmagnetische äußere Magneteinheiten 23, 23', die an einander diametral gegenüberliegenden Längsseiten des Gehäuses 2 im Bereich der erwähnten Wandabschnitte 14, 14' am Außenteil 6 festgelegt sind. Die inneren Magneteinheiten 17, 17' jeder inneren Magneteinrichtung 16 werden somit auf in Querrichtung 18 einander entgegengesetzten Seiten von den beiden äußeren Magneteinheiten 23, 23' der zugeordneten äußeren Magneteinrichtung 22 flankiert. Die magnetische Polarisierung der äußeren Magneteinheiten 23, 23' ist identisch mit derjenigen der zugeordneten inneren Magneteinheiten 17, 17'.

Die äußeren Magneteinheiten 23, 23' sind an einem zum Außenteil 6 gehörenden äußeren Magnetträger 24 festgelegt. Er besteht zweckmäßigerweise aus unmagnetischem, nicht magnetisierbarem Material, vorzugsweise wie abgebildet aus Kunststoffmaterial. Auch die äußeren Magneteinheiten 23, 23' sind zweckmäßigerweise klotz- bzw. plattenähnlich ausgebildet.

Zusätzlich zu dem äußeren Magnetträger 24 verfügt das Außenteil 6 über ein aus weichmagnetischem Material bestehendes Rückschlußteil 25, welches das Gehäuse 2 über einen Teil seines Umfanges in Umfangsrichtung umgreift und eine äußere, magnetisch leitende Verbindung zwischen den beiden äußeren Magneteinheiten 23, 23' herstellt. Das Rückschlußteil ist bügelartig ausgebildet und hat einen U-ähnlichen Querschnitt, wobei es von einer Schmalseite des Gehäuses 2 her an dieses angesetzt ist, so daß es das Gehäuse 2 mit seinen beiden Bügelschenkeln 26, 26' im Bereich der beiden Wandabschnitte 14, 14' an diametral gegenüberliegenden Längsseiten übergreift. Die äußeren Magneteinheiten 23, 23' liegen im Bereich der freien Enden an den Bügelschenkeln 26, 26' an, insbesondere von der Innenseite der Bügelschenkel 26, 26' her, so daß sie von den Bügelschenkeln 26, 26' an der den inneren Magneteinheiten 17, 17' entgegengesetzten Außenseite flankiert werden.

Jeder äußeren Magneteinrichtung 22 könnte prinzipiell ein eigenes separates Rückschlußteil 25 zugeordnet sein. Allerdings wird die gezeigte Bauform bevorzugt, bei der die äußeren Magneteinrichtungen 22 ein gemeinsames Rückschlußteil 25 aufweisen, dessen Baulänge so gewählt ist, daß es sich über alle äußeren Magneteinheiten 23, 23' erstreckt.

Jedes Paar einander zugeordneter innerer und äußerer Magneteinrichtungen 16, 22 bildet mit dem zugehörigen Längenabschnitt des Rückschlußteils 25 eine Kopplungseinheit 27, wobei das Ausführungsbeispiel über drei solcher Kopplungseinheiten 27 verfügt. Es ist ersichtlich, daß sich die Anzahl der Kopplungseinheiten dem Anwendungsfall und der erforderlichen Kopplungskraft entsprechend leicht variieren läßt. Für leichtere Transportaufgaben würde bereits eine einzige Kopplungseinheit 27 ausreichen, wobei dann das Außenteil 6 entsprechend kurz ausfallen könnte.

Jede Kopplungseinheit 27 erzeugt nun einen Magnetkreis 13 der eingangs bereits erwähnten Art. Dieser verläuft entsprechend der vorgegebenen Polarisierungsrichtung durch die inneren und äußeren Magneteinheiten 17, 17'; 23, 23', wobei er das Innenteil 5 und das Gehäuse 2 in Querrichtung 18 durchdringt, und ist außerhalb des Gehäuses 2 über das U-förmige Rückschlußteil 25 geschlossen.

Dieser Verlauf des Magnetkreises 13 gilt für alle Kopplungseinheiten 27. Die magnetische Polarisationsrichtung der Magneteinheiten 17, 17; 23, 23' aller Kopplungseinheiten 27 ist beim Ausführungsbeispiel gleichgerichtet, so daß eine Rückführung eines Magnetkreises über eine benachbarte Anordnung von Magneteinheiten unterbleibt. Die einzelnen Magnetkreise 13 durchqueren das Innenteil 5 und das Gehäuse 2 jeweils nur einmal.

Letzteres trifft auch für die Ausführungsform gemäß Fig. 6 zu. Sie unterscheidet sich von der Ausführungsform gemäß Fig. 1 bis 3 allerdings dadurch, daß die einzige oder die gegebenenfalls vorhandenen mehreren Kopplungseinheiten 27 lediglich über eine innere Magneteinrichtung 16 verfügen, jedoch keine äußere Magneteinrichtung aufweisen. Außerhalb des Gehäuses 2 am Außenteil 6 ist lediglich ein Rückschlußteil 25 vorgesehen, so daß auch auf einen äußeren Magnetträger verzichtet werden kann. Das Rückschlußteil 25 ist ähnlich der Fig. 1 bügelartig ausgeführt und ragt mit seinen Bügelschenkeln 26, 26' über die in Querrichtung 18 ausgerichteten Polenden 28, 28' der inneren Magneteinrichtung 16. Dabei kann, wie abgebildet, die innere Magneteinrichtung 16 aus nur einer einzigen Magneteinheit 17 bestehen, die den Querschnitt zwischen den von den Bügelschenkeln 26, 26' flankierten Wandabschnitten 14, 14' des Gehäuses 2 vorzugsweise zumindest annähernd ausfüllt. In einer alternativen Bauform wäre es auch denkbar, das Innenteil 5 ohne innere Magneteinrichtung 16 auszubilden und statt dieser nur eine aus weichmagnetischem Material bestehende Flußleiteinrichtung vorzusehen, wobei dann in dem im Außenteil 6 verlaufenden Längenabschnitt des Magnetkreises 13 wenigstens eine äußere Magneteinrichtung zu plazieren wäre, die beispielsweise auch im Bereich des die beiden Bügelschenkel 26, 26' verbindenden Verbindungssteges 29 plaziert sein könnte. Diese vorstehenden Ausführungen in bezug auf eventuelle Weglassung bzw. andere Plazierung der inneren und/oder äußeren Magneteinrichtung gelten im übrigen auch für die anderen Ausführungsbeispiele.

In Fig. 6 ist des weiteren strichpunktiert eine weitere Ausführungsvariante gezeigt, bei der das zum Außenteil 6 gehörende Rückschlußteil 25 als das Gehäuse 2 manschettenartig vollständig umschließender Ring- oder Hülsenkörper 32 ausgebildet ist. Dadurch werden von ein und derselben Kopplungseinheit 27 zwei das Innenteil 5 und das Gehäuse 2 in Querrichtung 18 vollständig durchsetzende Magnetkreise 13', 13'' erzeugt, die außerhalb des Gehäuses 2 über das ringartig in sich geschlossene Rückschlußteil 25 im Bereich einander entgegengesetzter Umfangsabschnitte des Gehäuses 2 zurückgeführt werden.

Die Fig. 6 zeigt darüber hinaus eine weitere Variante für den möglichen Querschnitt des Gehäuses 2, welches hier sowohl innen als auch außen oval und insbesondere elliptisch konturiert ist.

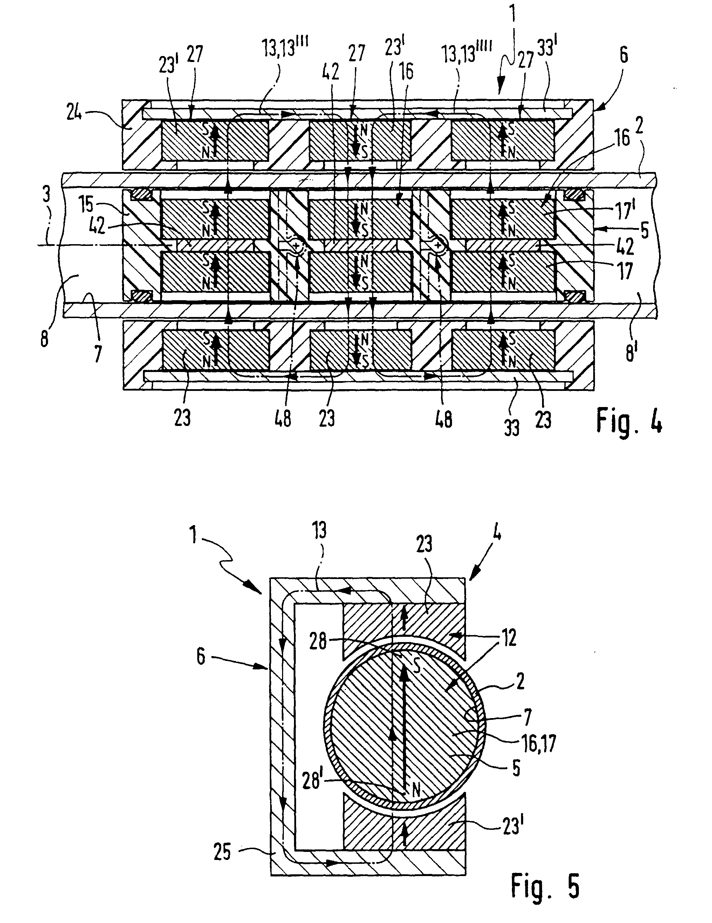

Die Fig. 4 zeigt eine Ausführungsform der Antriebsvorrichtung 1, die ähnlich derjenigen gemäß Fig. 1 bis 3 aufgebaut ist. Auch sie verfügt über mehrere in Axialrichtung aufeinanderfolgend angeordnete Kopplungseinheiten 27, die jeweils eine aus einer oder mehreren inneren Magneteinheiten 17, 17' bestehende innere Magneteinrichtung 16 und eine dieser zugeordnete äußere Magneteinrichtung 22 mit insbesondere diametral beidseits der inneren Magneteinrichtung 16 angeordneten äußeren Magneteinheiten 23, 23' aufweist. Im Gegensatz zur Bauform gemäß Fig. 1 bis 3 ist allerdings die Polarisierungsrichtung der Magneteinheiten 17, 17'; 23, 23' jeweils aufeinanderfolgender Kopplungseinheiten 27 entgegengesetzt gerichtet. Anstelle eines das Gehäuse 2 umgreifenden Rückschlußteils verfügt das Außenteil 6 im Bereich der beiden Reihen äußerer Magneteinheiten 23, 23' über jeweils einen beispielsgemäß plattenartigen, aus weichmagnetischem Material bestehenden Flußleitkörper 33, 33', der die betreffende Reihe von äußeren Magneteinheiten 23, 23' miteinander verbindet, indem er an diesen anliegt und sie insbesondere überdeckt. Die Flußleitkörper 33, 33' sind beim Ausführungsbeispiel in einer Vertiefung des Außenteils 6 gehalten. Als Folge dieser Anordnung werden das Innenteil 5 und das Gehäuse 2 von den erzeugten Magnetkreisen 13"', 13"" jeweils mit entgegengesetzter Flußrichtung zweimal durchquert, wobei der Hinfluß über die Magneteinheiten der jeweils einen Kopplungseinheit 27 und der Rückfluß über die sich anschließende andere Kopplungseinheit 27 erfolgt. Der magnetische Schluß außerhalb des Gehäuses 2 geschieht über die Flußleitkörper 33, 33'. Anstelle der beiden separaten Flußleitkörper 33, 33' könnte auch ein Rückschlußteil 25 der in Fig. 1 und 2 gezeigten Art treten, so daß die anhand der Fig. 1 bis 3 geschilderten und die anhand der Fig. 4 geschilderten Magnetkreise gleichzeitig auftreten können.

Die Fig. 5 zeigt eine Antriebsvorrichtung mit einer Kopplungseinheit 27, die eine einzige innere Magneteinheit 17, zwei an einander diametral gegenüberliegenden Außenseiten des Gehäuses 2 angeordnete äußere Magneteinheiten 23, 23' und ein die letzteren miteinander verbindendes bügelartiges Rückschlußteil 25 aufweist. Der Querschnitt des Gehäuses 2 ist hier sowohl innen als auch vorzugsweise außen kreisrund ausgebildet. Wiederum ist die innere Magneteinrichtung 16, die hier aus einer Magnetscheibe besteht, diametral polarisiert, wobei die äußeren Magneteinheiten 23, 23' eine gleichgerichtete Polarisierung aufweisen. Das Ausführungsbeispiel macht deutlich, daß die Polenden 28, 28' der inneren Magneteinrichtung 16 wie auch diejenigen der äußeren Magneteinheiten 23, 23' der Kontur des Gehäuses 2 folgend geformt sein können.

Nun zurück zum Ausführungsbeispiel der Fig. 1 bis 3, aus dem eine besonders vorteilhafte Möglichkeit zur Fixierung der einzelnen Magneteinheiten 17, 17'; 23, 23' hervorgeht. Dabei ist jede Magneteinheit in einer nachfolgend als Tasche 34, 35 bezeichneten Aufnahmevertiefung des zugeordneten Magnetträgers 15, 24 aufgenommen.

Das Innenteil 5 verfügt für jede Kopplungseinheit 27 über zwei derartige Taschen 34, die in das Innenteil 5 an einander entgegengesetzten Längsseiten gegenüberliegend den Wandabschnitten 14, 14' eingebracht sind. Ihr Umriß entspricht gemäß Fig. 3 zweckmäßigerweise dem der aufzunehmenden Magneteinheit 17, 17'. Die in Querrichtung 18 gemessene Tiefe der Taschen 34 ist etwas geringer als die entsprechend gemessene Baubreite des inneren Magnetträgers 15, so daß mittig im Innern des Magnetträgers 15 ein Steg 36 verbleibt, der gleichzeitig den Boden der beiden Taschen 34 bildet. Da die in den Taschen 34 sitzenden inneren Magneteinheiten 17, 17' gleichgerichtet polarisiert sind, sind sie mit ungleichnamigen Polen einander zugewandt und ziehen sich gegenseitig an. Dadurch werden sie selbsttätig gegen den Steg 36 gehalten. Dieser bildet also Abstandshaltemittel 37, die in Verbindung mit der magnetischen Anziehungskraft für einen sicheren Halt der inneren Magneteinheiten 17, 17' sorgen, so daß für diese keine weiteren oder zumindest nur recht einfache zusätzliche Fixiermittel zur Lagefixierung benötigt werden.

Der Steg 36 könnte ohne weiteres auch durchbrochen sein, so daß als Abstandshaltemittel beispielsweise in Fig. 2 und 3 strichpunktiert angedeutete randseitige, vorzugsweise leistenförmige Vorsprünge 38 verbleiben, auf denen die inneren Magneteinheiten 17, 17' aufsitzen. Der verbleibende Zwischenraum kann bei Bedarf, wie dies aus Fig. 4 hervorgeht, mit einem weichmagnetischen Flußleitstück 42 ausgefüllt sein, welches den magnetischen Widerstand reduziert und zu einer Erhöhung der Magnetkräfte beiträgt. Zum zugeordneten Wandabschnitt 14, 14' des Gehäuses 2 hin können die Taschen 34 offen sein, doch sollte die maßliche Abstimmung so ausfallen, daß die Magneteinheiten 15 mit Radialabstand zur Oberfläche des Innenraums 7 zu liegen kommen.

Die äußeren Magneteinheiten 23, 23' sind in vergleichbaren Taschen 35 aufgenommen, die von der dem Gehäuse 2 entgegengesetzten Seite her im Bereich der Wandabschnitte 14, 14' in den äußeren Magnetträger 24 eingelassen sind.

Indem das Außenteil 6 insgesamt bügelartig ausgebildet ist, und zwar derart, daß sich abgesehen von eventuell vorhandenen Stabilisierungsmitteln 43 im aufgesetzten Zustand kein Hinterschnitt mit dem Gehäuse 2 ergibt, ist eine bequeme Seitenmontage an das Gehäuse 2 möglich. Dadurch werden auch Überbeanspruchungen der Magnete bei der Montage vermieden.

Beim Ausführungsbeispiel ist der äußere Magnetträger 24 wie das Rückschlußteil 25 bügelartig ausgeführt und besteht aus Kunststoffmaterial, so daß seine Schenkel in Querrichtung 18 geringfügig elastisch nachgiebig sind. Bei der Montage läßt sich daher der äußere Magnetträger 24 einfach auf das Gehäuse 2 aufclipsen, so daß an der Innenseite seiner Schenkel vorgesehene, beispielsgemäß von leichten Vorsprüngen gebildete Stabilisierungsmittel 43 in eine durchgehende Längsvertiefung 41 an der Außenfläche des Gehäuses 2 einschnappen können. Anschließend wird das bügelförmige Rückschlußteil 25 aufgesteckt, das auf Grund seiner metallischen Ausführung verhältnismäßig starr ist und mit seinen Bügelschenkeln 26, 26' die Schenkel des äußeren Magnetträgers 24 überlagert und gegen ein Aufweiten in Querrichtung 18 abstützt. Dadurch sind die Schenkel der äußeren Magneteinrichtung 22 gegen ein Aufbiegen gesichert und damit auch die Position des Außenteils 6 auf dem Gehäuse 2.

Zur Verringerung der Reibung bei der Längsbewegung der Bewegungseinheit 4 können am Außenteil 6 und/oder am Innenteil 5 Kufen 40 vorgesehen sein, die am Gehäuse 2 gleitend anliegen. Sie können am zugeordneten inneren bzw. äußeren Magnetträger 15 einstückig angeformt sein.

Das aufgesteckte Rückschlußteil 25 wird durch die Magnetkraft gehalten. Bei Bedarf kann aber noch eine zusätzliche Fixiereinrichtung vorgesehen sein.

Durch die bügelartige Ausbildung des Außenteils 6 wird nur ein Teil des Gehäuses 2 umgriffen. Dadurch besteht die Möglichkeit, in dem vom Außenteil 6 nicht umfaßten Bereich mindestens eine längsverlaufende, zur Versteifung und/oder zur Befestigung des Gehäuses 2 dienende Schiene 44, 44' vorzusehen und insbesondere einstückig anzuformen. Die mindestens eine Schiene 44, 44' kann durchgehende Löcher 45 aufweisen, an denen sich Befestigungsmittel ansetzen lassen, um das Gehäuse 2 an einer beliebigen Tragstruktur 46, beispielsweise an einer Gebäudewand, festzulegen.

In die Wandung des Gehäuses 2 können auch noch ein oder mehrere, in Längsrichtung durchgehende Kanäle 46 eingeformt sein, die, wenn sie geschlossen sind, zur Fluidübertragung verwendbar sind. Auf diese Weise kann beispielsweise an einer Endseite eingespeistes Druckmedium zum entgegengesetzten Arbeitsraum geleitet werden. Wie aus Fig. 1 hervorgeht, können in dem Gehäuse 2 auch in Längsrichtung verlaufende nutartige Vertiefungen eingeformt sein. Die Stirnseiten der Kanäle 46 und/oder Vertiefungen 47 können verwendet werden, um unter Verwendung von Schrauben mit selbstschneidendem Gewinde Abschlußdeckel aufzuschrauben. Auch können darin bei Bedarf Sensoren oder sonstige Zusatzteile verankert werden.

Beim Ausführungsbeispiel findet sich im Bereich der beiden Schmalseiten des Gehäuses 2 jeweils ein Kanal 46 und eine Vertiefung 47, die in Gehäusevorsprüngen ausgebildet sind, welche vom Gehäuse 2 im Querschnitt gesehen ohrenähnlich abstehen.

Um es der Bewegungseinheit 4 zu ermöglichen, entlang einer zumindest abschnittsweise gekrümmten Bahn verlagert zu werden, kann vorgesehen sein, das Innenteil 5 und das Außenteil 6 in mehrere in Längsrichtung aufeinanderfolgende Segmente zu unterteilen. Diese Segmente sind dann, wie in Fig. 4 strichpunktiert angedeutet ist, durch Gelenkeinrichtungen 48 begrenzt verschwenkbar miteinander verbunden. Die Gelenkeinrichtungen 48 des Innenteils und des Außenteils befinden sich dabei zweckmäßigerweise auf Höhe der in Längsrichtung des Querschnittes verlaufenden Mittelebene 49 des Gehäuses 2.

## Patentansprüche

1. Antriebsvorrichtung, mit einem rohrförmigen Gehäuse (2), an dem eine längsbewegliche Bewegungseinheit (4) angeordnet ist, die ein im Innern des Gehäuses (2) befindliches Innenteil (5) und ein mit diesem durch eine mindestens eine permanentmagnetische Magneteinrichtung (16, 22) aufweisende Kopplungseinrichtung (12) magnetisch bewegungsgekoppeltes, außen am Gehäuse (2) angeordnetes Außenteil (6) aufweist, wobei die Kopplungseinrichtung (12) mindestens einen das Innenteil (5) und das Gehäuse (2) vollständig durchquerenden und über das Außenteil (6) geschlossenen Magnetkreis (13) erzeugt, **dadurch gekennzeichnet, daß** in dem mindestens einen geschlossenen Magnetkreis (13) eine am Innenteil (5) angeordnete permanentmagnetische innere Magneteinrichtung (16) vorgesehen ist

2. Antriebsvorrichtung nach Anspruch 1, **dadurch gekennzeichnet, daß** mindestens ein Magnetkreis (13, 13', 13'') das Innenteil (5) und das Gehäuse (2) nur einmal durchquert und außerhalb des Gehäuses (2) über das Außenteil (6) um das Gehäuse (2) herumgeführt ist.

3. Antriebsvorrichtung nach Anspruch 1 oder 2, **dadurch gekennzeichnet, daß** mindestens ein Magnetkreis (13, 13''', 13'''') das Innenteil (5) und das Gehäuse (2) mit entgegengesetzter Flußrichtung zweimal durchquert und an entgegengesetzten Längsseiten des Gehäuses (2) über das Außenteil (6) geschlossen ist.

4. Antriebsvorrichtung nach einem der Ansprüche 1 bis 3, **dadurch gekennzeichnet, daß** die Kopplungseinrichtung (12) mehrere das Gehäuse (2) und das Innenteil (5) ganz durchquerende Magnetkreise (13, 13''', 13'''') erzeugt.

5. Antriebsvorrichtung nach einem der Ansprüche 1 bis 4, **dadurch gekennzeichnet, daß** am Innenteil (5) mehrere in Längsrichtung des Innenteils (5) aufeinanderfolgend angeordnete innere Magneteinrichtungen (16) vorgesehen sind.

6. Antriebsvorrichtung nach einem der Ansprüche 1 bis 5, **dadurch gekennzeichnet, daß** jede innere Magneteinrichtung (16) über mindestens eine innere permanentmagnetische Magneteinheit (17, 17') verfügt.

7. Antriebsvorrichtung nach Anspruch 6, **dadurch gekennzeichnet, daß** jede innere Magneteinrichtung (16) über zwei quer zur Längserstreckung (3) des Innenteils (5) nebeneinanderliegend angeordnete innere Magneteinheiten (17, 17') mit gleichgerichteter Polarisierung verfügt.

8. Antriebsvorrichtung nach Anspruch 6 oder 7, **dadurch gekennzeichnet, daß** jede innere Magneteinheit (17, 17') in einer Tasche (34) eines zweckmäßigerweise aus nicht magnetisierbarem Material, insbesondere aus Kunststoffmaterial, bestehenden inneren Magnetträgers (15) des Innenteils (5) gehalten ist.

9. Antriebsvorrichtung nach Anspruch 8 in Verbindung mit Anspruch 7, **dadurch gekennzeichnet, daß** die beiden inneren Magneteinheiten (17, 17') einer jeweiligen inneren Magneteinrichtung (16) in eigenen Taschen (34) aufgenommen sind, wobei zwischen den Magneteinheiten (17, 17') mit dem inneren Magnetträger (15) fest verbundene Abstandshaltemittel (37) vorgesehen sind.

10. Antriebsvorrichtung nach Anspruch 9, **dadurch gekennzeichnet, daß** zwischen den nebeneinanderliegenden inneren Magneteinheiten (17, 17') ein weichmagnetisches Flußleitstück (42) angeordnet ist.

11. Antriebsvorrichtung nach einem der Ansprüche 8 bis 10, **dadurch gekennzeichnet, daß** die Taschen (34) an der der Wand des Gehäuses (2) zugewandten Längsseite des inneren Magnetträgers (15) offen sind.

12. Antriebsvorrichtung nach einem der Ansprüche 1 bis 11, **dadurch gekennzeichnet, daß** in dem mindestens einen geschlossenen Magnetkreis (13) eine am Außenteil (6) angeordnete permanentmagnetische äußere Magneteinrichtung (22) vorgesehen ist.

13. Antriebsvorrichtung nach Anspruch 12, **dadurch gekennzeichnet, daß** am Außenteil (6) mehrere in Längsrichtung (3) des Außenteils (6) aufeinanderfolgend angeordnete äußere Magneteinrichtungen (22) vorgesehen sind.

14. Antriebsvorrichtung nach Anspruch 12 oder 13, **dadurch gekennzeichnet, daß** jede äußere Magneteinrichtung (22) über zwei an einander diametral gegenüberliegenden Längsseiten des Gehäuses (2) am Außenteil (6) angeordnete permanentmagnetische äußere Magneteinheiten (23, 23') verfügt.

15. Antriebsvorrichtung nach Anspruch 14, **dadurch gekennzeichnet, daß** jede äußere Magneteinheit (23, 23') in einer Tasche (35) eines zweckmäßigerweise aus nicht magnetisierbarem Material, insbesondere aus Kunststoffmaterial, bestehenden äußeren Magnetträgers (24) des Außenteils (6) gehalten ist.

16. Antriebsvorrichtung nach einem der Ansprüche 1 bis 15, **dadurch gekennzeichnet, daß** die Kopplungseinrichtung (12) mindestens eine Kopplungseinheit (27) aufweist, die eine innere Magneteinrichtung (16) und eine äußere Magneteinrichtung (22) umfaßt.

17. Antriebsvorrichtung nach Anspruch 16, **dadurch gekennzeichnet, daß** jede Kopplungseinheit (27) zwei an einander diametral gegenüberliegenden Längsseiten des Gehäuses (2) am Außenteil (6) vorgesehene äußere Magneteinheiten (23, 23') und wenigstens eine zwischen diesen beiden äußeren Magneteinheiten (23, 23') am Innenteil (5) vorgesehene innere Magneteinheit (17, 17') aufweist, wobei die inneren und äußeren Magneteinheiten (17, 17'; 23, 23') innerhalb jeder Kopplungseinheit (27) quer zur Längserstreckung (3) des Gehäuses (2) gleichgerichtet polarisiert sind.

18. Antriebsvorrichtung nach Anspruch 17, **dadurch gekennzeichnet, daß** die Polarisierungsrichtung der Magneteinheiten (17, 17'; 23, 23') aufeinanderfolgender Kopplungseinheiten (27) gleichgerichtet ist.

19. Antriebsvorrichtung nach Anspruch 17 oder 18, **dadurch gekennzeichnet, daß** die Polarisierungsrichtung der Magneteinheiten (17, 17'; 23, 23') mehrerer aufeinanderfolgender Kopplungseinheiten (27) entgegengesetzt gerichtet ist.

20. Antriebsvorrichtung nach einem der Ansprüche 14 bis 19, **dadurch gekennzeichnet, daß** die äußeren Magneteinheiten (23, 23') mehrerer aufeinanderfolgend angeordneter äußerer Magneteinrichtungen (22) an der betreffenden Längsseite des Gehäuses (2) durch insbesondere plattenartige, weichmagnetische Flußleitkörper (33. 33') magnetisch leitend verbunden sind.

21. Antriebsvorrichtung nach einem der Ansprüche 6 bis 19, **dadurch gekennzeichnet, daß** die inneren und/oder äußeren Magneteinheiten (17, 17'; 23, 23') platten-, stab- oder klotzartig ausgebildet sind.

22. Antriebsvorrichtung nach einem der Ansprüche 1 bis 21, **dadurch gekennzeichnet, daß** das Außenteil (6) über mindestens ein das Gehäuse (2) über wenigstens einen Teil seines Umfanges umgreifendes weichmagnetisches Rückschlußteil (25) verfügt, in dem wenigstens ein geschlossener Magnetkreis teilweise verläuft.

23. Antriebsvorrichtung nach Anspruch 22, **dadurch gekennzeichnet, daß** das Rückschlußteil (25) ein das Gehäuse (2) vollständig umschließender Ring- oder Hülsenkörper (32) ist.

24. Antriebsvorrichtung nach Anspruch 22, **dadurch gekennzeichnet, daß** das Rückschlußteil (25) bügelartig ausgebildet ist und das Gehäuse (2) mit seinen Bügelschenkeln (26, 26') an diametral gegenüberliegenden Längsseiten übergreift.

25. Antriebsvorrichtung nach einem der Ansprüche 1 bis 24, **dadurch gekennzeichnet, daß** das Außenteil (6) bügelartig ausgebildet ist und das Gehäuse (2) mit seinen Schenkeln an diametral gegenüberliegenden Längsseiten übergreift.

26. Antriebsvorrichtung nach Anspruch 25 in Verbindung mit Anspruch 24, **dadurch gekennzeichnet, daß** das Außenteil (6) einen bügelartigen äußeren Magnetträger (24) aufweist, der über äußere Magneteinheiten (23, 23') enthaltende Taschen (35) verfügt und auf den ein bügelartiges Rückschlußteil (25) aufgesteckt ist, das mit seinen Bügelschenkeln (26, 26') die äußeren Magneteinheiten (23, 23') übergreift.

27. Antriebsvorrichtung nach einem der Ansprüche 1 bis 26, **dadurch gekennzeichnet, daß** das rohrförmige Gehäuse (2) in dem vom Außenteil (6) nicht umfaßten Bereich mindestens eine längsverlaufende, zur Versteifung und/oder zur Befestigung des Gehäuses (2) dienende Schiene (44, 44') aufweist.

28. Antriebsvorrichtung nach einem der Ansprüche 1 bis 27, **dadurch gekennzeichnet, daß** der Querschnitt des das Innenteil (5) enthaltenden Innenraumes (7) des Gehäuses (2) kreisrund oder von der Kreisform abweichend und hierbei insbesondere oval oder länglich mit ebenen Längsseiten und bogenförmigen Schmalseiten ausgeführt ist.

29. Antriebsvorrichtung nach einem der Ansprüche 1 bis 28, **dadurch gekennzeichnet, daß** das Innenteil (5) und das Außenteil (6) in mehrere in Längsrichtung (3) aufeinanderfolgende Segmente unterteilt sind, die zur Ermöglichung nichtlinearer Längsbewegungen gelenkig miteinander verbunden sind.

30. Antriebsvorrichtung nach einem der Ansprüche 1 bis 29, **dadurch gekennzeichnet, daß** das Innenteil (5) als insbesondere fluidbetätigtes Antriebsteil und das Außenteil (6) als mit einem zu bewegenden Gegenstand verbindbares Abtriebsteil ausgebildet ist.

## Claims

1. Drive unit, with a tubular housing (2) on which is mounted a longitudinally movable movement unit (4), with an inner section (5) located inside the housing (2) and an outer section (6) mounted on the outside of the housing (2) and magnetically movement-coupled to the inner section by means of a coupling device (12) with one or more permanent-magnetic magnet devices (16, 22), wherein the coupling device (12) generates one or more magnetic circuits (13) passing completely through the inner section (5) and the housing (2) and closed via the outer section (6), **characterized in that** a permanent-magnetic inner magnet device (16) located on the inner section (5) is provided on the closed magnetic circuit or circuits (13).

2. Drive unit according to claim 1, **characterized in that** at least one magnetic circuit (13, 13', 13") passes through the inner section (5) and the housing (2) only once and is guided outside the housing (2) via the outer section (6) around the housing (2).

3. Drive unit according to claim 1 or 2, **characterized in that** at least one magnetic circuit (13, 13"', 13"") passes through the inner section (5) and the housing (2) twice with opposed direction of flux, and is closed via the outer section (6) at opposite long sides of the housing (2).

4. Drive unit according to any of claims 1 to 3, **characterized in that** the coupling device (12) generates several magnetic circuits (13, 13"', 13"") which pass completely through the housing (2) and the inner section (5).

5. Drive unit according to any of claims 1 to 4, **characterized in that** several inner magnet devices (16) are provided on the inner section (5), arranged consecutively in the longitudinal direction of the inner section (5).

6. Drive unit according to any of claims 1 to 5, **characterized in that** each inner magnet device (16) has one or more permanent-magnetic magnet units (17, 17').

7. Drive unit according to claim 6, **characterized in that** each inner magnet device (16) has two inner magnet units (17, 17') polarised in the same direction, arranged adjacent to one another at right-angles to the longitudinal extent (3) of the inner section (5).

8. Drive unit according to claim 6 or 7, **characterized in that** each inner magnet unit (17, 17') is held in a pocket (34) of an inner magnet support (15) of the inner section (5), which is expediently made of non-magnetizable material, in particular plastic.

9. Drive unit according to claim 8 in conjunction with claim 7, **characterized in that** the two inner magnet units (17, 17') of each inner magnet device (16) are held in separate pockets (34), while distance pieces (37) securely connected to the inner magnet support (15) are provided between the magnet units (17, 17').

10. Drive unit according to claim 9, **characterized in that** a soft magnetic flux conducting element (42) is located between the adjacent inner magnet units (17, 17').

11. Drive unit according to any of claims 8 to 10, **characterized in that** the pockets (34) are open on the long side of the inner magnet support (15) facing the wall of the housing (2).

12. Drive unit according to any of claims 1 to 11, **characterized in that** a permanent-magnetic outer magnet device (22) located on the outer section (6) is provided on the closed magnetic circuit or circuits (13).

13. Drive unit according to claim 12, **characterized in that** several outer magnet devices (22) are provided on the outer section (6), arranged consecutively in the longitudinal direction (3) of the outer section (6).

14. Drive unit according to claim 12 or 13, **characterized in that** each outer magnet device (22) has two permanent-magnetic outer magnet units (23, 23') located on the outer section (6) at diametrically opposite long sides of the housing (2).

15. Drive unit according to claim 14, **characterized in that** each outer magnet unit (23, 23') is held in a pocket (35) of an outer magnet support (24) of the outer section (6), which is expediently made of non-magnetizable material, in particular plastic.

16. Drive unit according to any of claims 1 to 15, **characterized in that** the coupling device (12) has one or more coupling units (27), comprising one inner magnet device (16) and one outer magnet device (22).

17. Drive unit according to claim 16, **characterized in that** each coupling unit (27) has two outer magnet units (23, 23') provided on the outer section (6) at diametrically opposite long sides of the housing (2), and one or more inner magnet units (17, 17') provided on the inner section (5) between these two outer magnet units (23, 23'), wherein the inner and outer magnet units (17, 17'; 23, 23') within each coupling unit (27) are polarised in the same direction at right-angles to the longitudinal extent (3) of the housing (2).

18. Drive unit according to claim 17, **characterized in that** the magnet units (17, 17'; 23, 23') of consecutive coupling units (27) are polarised in the same direction.

19. Drive unit according to claim 17 or 18, **characterized in that** the magnet units (17, 17'; 23, 23') of several consecutive coupling units (27) are polarised in opposite directions.

20. Drive unit according to any of claims 14 to 19, **characterized in that** the outer magnet units (23, 23') of several consecutive outer magnet devices (22) are connected with magnetic conductivity on the relevant long side of the housing (2) by means of soft magnetic flux conducting members (33, 33'), in particular plate-shaped.

21. Drive unit according to any of claims 6 to 19, **characterized in that** the inner and/or outer magnet units (17, 17'; 23, 23') are plate-, bar- or block-shaped in form.

22. Drive unit according to any of claims 1 to 21, **characterized in that** the outer section (6) has one or more soft magnetic yoke sections (25) encompassing the housing (2) over at least part of its circumference, in which one or more closed magnetic circuits runs in part.

23. Drive unit according to claim 22, **characterized in that** the yoke section (25) has an annular or sleeve body (32) completely enclosing the housing (2).

24. Drive unit according to claim 22, **characterized in that** the yoke section (25) is bow-shaped and overlaps the housing (2) with its bow arms (26, 26') on diametrically opposite long sides.

25. Drive unit according to any of claims 1 to 24, **characterized in that** the outer section (6) is bow-shaped and overlaps the housing (2) with its limbs on diametrically opposite long sides.

26. Drive unit according to claim 25 in conjunction with claim 24, **characterized in that** the outer section (6) has a bow-shaped outer magnet support (24) with pockets (35) containing outer magnet units (23, 23'), and is fitted on to a bow-shaped yoke section (25) which overlaps the outer magnet units (23, 23') with its bow arms (26, 26').

27. Drive unit according to any of claims 1 to 26, **characterized in that** the tubular housing (2) has in the area not covered by the outer section (6) one or more rails (44, 44') running longitudinally and serving to reinforce and/or attach the housing (2).

28. Drive unit according to any of claims 1 to 27, **characterized in that** the cross-section of the inner space (7) of the housing (2) containing the inner section (5) is circular or non-circular and in this connection in particular oval or elongated with flat long sides and curved narrow sides.

29. Drive unit according to any of claims 1 to 28, **characterized in that** the inner section (5) and the outer section (6) are divided into several segments, consecutive in the longitudinal direction (3), and hinged together to facilitate non-linear longitudinal movements.

30. Drive unit according to any of claims 1 to 29, **characterized in that** the inner section (5) is in the form of a drive section, in particular fluid-actuated, and the outer section (6) is an output member connectable to an object to be moved.

## Revendications

1. Dispositif d'entraînement comportant un boîtier (2) de forme tubulaire sur lequel est disposée une unité de déplacement (4) déplaçable longitudinalement, qui comporte une partie intérieure (5), se trouvant à l'intérieur du boîtier (2), et une partie extérieure (6), disposée à l'extérieur du boîtier (2) et accouplée magnétiquement en déplacement avec la partie, par un dispositif d'accouplement (12) qui comporte au moins un dispositif magnétique (16, 22) à magnétisme permanent, le dispositif d'accouplement (12) produisant au moins un circuit magnétique (13) qui traverse entièrement la partie intérieure (5) et le boîtier (2) et qui est fermé par la partie extérieure (6), **caractérisé en ce que** dans le ou les circuits magnétiques fermés (13), il est prévu un dispositif magnétique intérieur (16) à magnétisme permanent, disposé sur la partie intérieure (5).

2. Dispositif d'entraînement selon la revendication 1, **caractérisé en ce qu'**au moins un circuit magnétique (13, 13', 13") ne traverse qu'une fois la partie intérieure (5) et le boîtier (2), et passe, à l'extérieur du boîtier (2), autour du boîtier (2), par la partie extérieure (6).

3. Dispositif d'entraînement selon la revendication 1 ou 2, **caractérisé en ce qu'**au moins un circuit magnétique (13, 13"', 13"") traverse deux fois la partie intérieure (5) et le boîtier (2) avec sens d'écoulement opposé, et est fermé, sur des côtés longitudinaux opposés du boîtier, par la partie extérieure (6).

4. Dispositif d'entraînement selon l'une des revendications 1 à 3, **caractérisé en ce que** le dispositif d'accouplement (12) produit plusieurs circuits magnétiques (13, 13"', 13"") qui traversent entièrement la partie intérieure (5).

5. Dispositif d'entraînement selon l'une des revendications 1 à 4, **caractérisé en ce que** sur la partie intérieure (5) sont prévus plusieurs dispositifs magnétiques intérieurs (16) disposés les uns à la suite des autres dans la direction longitudinale de la partie intérieure (5).

6. Dispositif d'entraînement selon l'une des revendications 1 à 5, **caractérisé en ce que** chaque dispositif magnétique intérieur (16) dispose d'au moins une unité magnétique intérieure (17, 17') à magnétisme permanent.

7. Dispositif d'entraînement selon la revendication 6, **caractérisé en ce que** chaque dispositif magnétique intérieur (16) dispose de deux unités magnétiques intérieures (17, 17') à même sens de polarisation, disposées côte à côte, transversalement à l'étendue longitudinale (3) de la partie intérieure (5).

8. Dispositif d'entraînement selon la revendication 6 ou 7, **caractérisé en ce que** chaque unité magnétique intérieure (17, 17') est maintenue dans une poche (34) d'une porte-aimant intérieur (15) de la partie intérieure (5), constitué avantageusement d'une matière non magnétisable, en particulier d'une matière plastique.

9. Dispositif d'entraînement selon la revendication 8 en combinaison avec la revendication 7, **caractérisé en ce que** les deux unités magnétiques intérieures (17, 17') de chaque dispositif magnétique intérieur (16) sont logées dans des poches (34) qui leur sont propres, des moyens d'écartement (37), reliés fixement au porte-aimant intérieur (15), étant prévus entre les unités magnétiques (17, 17').

10. Dispositif d'entraînement selon la revendication 9, **caractérisé en ce qu'**une pièce de guidage de flux (42) magnétique doux est disposée entre les unités magnétiques intérieures (17, 17') juxtaposées.

11. Dispositif d'entraînement selon l'une des revendications 8 à 10, **caractérisé en ce que** les poches (34) sont ouvertes sur le côté longitudinal du porte-aimant intérieur (15), tourné vers la paroi du boîtier (2).

12. Dispositif d'entraînement selon l'une des revendications 1 à 11, **caractérisé en ce que** dans le ou les circuits magnétiques fermés (13) est prévu un dispositif magnétique extérieur (22) à magnétisme permanent, disposé sur la partie extérieure (6).

13. Dispositif d'entraînement selon la revendication 12, **caractérisé en ce que** sur la partie extérieure (6) sont prévus plusieurs dispositifs magnétiques extérieurs (22), disposés les uns à la suite des autres dans la direction longitudinale (3) de la partie extérieure (2).

14. Dispositif d'entraînement selon la revendication 12 ou 13, **caractérisé en ce que** chaque dispositif magnétique extérieur (22) dispose de deux unités magnétiques extérieures (23, 23') à magnétisme permanent, disposées sur la partie extérieure (6), sur des côtés longitudinaux diamétralement opposés l'un à l'autre du boîtier (2).

15. Dispositif d'entraînement selon la revendication 14, **caractérisé en ce que** chaque unité magnétique extérieure (23, 23') est maintenue dans une poche (35) d'un porte-aimant extérieur (24) de la partie extérieure (6), constitué avantageusement d'une matière non magnétisable, en particulier d'une matière plastique.

16. Dispositif d'entraînement selon l'une des revendications 1 à 15, **caractérisé en ce que** le dispositif d'accouplement (12) comporte au moins une unité d'accouplement (27) qui comprend un dispositif magnétique intérieur (16) et un dispositif magnétique extérieur (22).

17. Dispositif d'entraînement selon la revendication 16, **caractérisé en ce que** chaque unité d'accouplement (27) comporte deux unités magnétiques extérieures (23, 23'), prévues sur la partie extérieure (6), sur des côtés longitudinaux diamétralement opposés l'un à l'autre du boîtier (2), et au moins une unité magnétique intérieure (17, 17'), prévue sur la partie intérieure (5), entre ces deux unités magnétiques extérieures (23, 23'), les unités magnétiques intérieures et extérieures (17, 17'; 23, 23') étant polarisées dans le même sens à l'intérieur de chaque unité d'accouplement (27), transversalement à l'étendue longitudinale (3) du boîtier (2).

18. Dispositif d'entraînement selon la revendication 17, **caractérisé en ce que** le sens de polarisation des unités magnétiques (17, 17'; 23, 23') d'unités d'accouplement (27) successives est le même.

19. Dispositif d'entraînement selon la revendication 17 ou 18, **caractérisé en ce que** les sens de polarisation des unités magnétiques (17, 17'; 23, 23') de plusieurs unités d'accouplement (27) successives sont opposés.

20. Dispositif d'entraînement selon l'une des revendications 14 à 19, **caractérisé en ce que** les unités magnétiques extérieures (23, 23') de plusieurs dispositifs magnétiques extérieurs (22), disposés les uns à la suite des autres, sont reliées de manière conductrice magnétiquement, sur le côté longitudinal concerné du boîtier (2), par des corps de guidage de flux (33, 33') magnétiques doux, en particulier de type plaque.

21. Dispositif d'entraînement selon l'une des revendications 6 à 19, **caractérisé en ce que** les unités magnétiques intérieures et/ou extérieures (17, 17'; 23, 23') sont de type plaque, de type barre ou de type bloc.

22. Dispositif d'entraînement selon l'une des revendications 1 à 21, **caractérisé en ce que** la partie extérieure (6) dispose d'au moins un élément de retour (25) magnétique doux, entourant le boîtier (2) sur au moins une partie de son pourtour et dans lequel au moins un circuit magnétique fermé s'étend en partie.

23. Dispositif d'entraînement selon la revendication 22, **caractérisé en ce que** l'élément de retour (25) est un corps annulaire ou corps en douille (32) qui enferme totalement le boîtier (2).

24. Dispositif d'entraînement selon la revendication 22, **caractérisé en ce que** l'élément de retour (25) est de type étrier et passe sur le boîtier (2), par ses branches d'étrier (26, 26'), sur des côtés longitudinaux diamétralement opposés.

25. Dispositif d'entraînement selon l'une des revendications 1 à 24, **caractérisé en ce que** la partie extérieure (6) est de type étrier et passe sur le boîtier (2), par ses branches, sur des côtés longitudinaux diamétralement opposés.

26. Dispositif d'entraînement selon la revendication 25 en combinaison avec la revendication 24, **caractérisé en ce que** la partie extérieure (6) comporte un porte-aimant extérieur (24) de type étrier qui dispose de poches (35) contenant des unités magnétiques extérieures (23, 23'), et qui est emboîté sur l'élément de retour (25) de type étrier, lequel passe, par ses branches d'étrier (26, 26'), sur les unités magnétiques extérieures (23, 23').

27. Dispositif d'entraînement selon l'une des revendications 1 à 26, **caractérisé en ce que** le boîtier (2) de forme tubulaire comporte, dans la zone non entourée par la partie extérieure (6), au moins un rail (44, 44') s'étendant longitudinalement et servant au raidissement et/ou à la fixation du boîtier (2).

28. Dispositif d'entraînement selon l'une des revendications 1 à 27, **caractérisé en ce que** la section transversale du volume intérieur (7) du boîtier (2), qui contient la partie intérieure (5), est circulaire ou d'une forme différente et est réalisée ici en particulier ovale ou oblongue avec des côtés longitudinaux plans et des petits côtés en forme d'arc.

29. Dispositif d'entraînement selon l'une des revendications 1 à 28, **caractérisé en ce que** la partie intérieure (5) et la partie extérieure (6) sont subdivisées en plusieurs segments se succédant dans la direction longitudinale (3), qui sont reliés entre eux de manière articulée pour permettre des mouvements longitudinaux non linéaires.

30. Dispositif d'entraînement selon l'une des revendications 1 à 29, **caractérisé en ce que** la partie intérieure (5) est conformée en partie d'entraînement actionnée en particulier par un fluide, et la partie extérieure (6) est conformée en partie menée qui peut être reliée à un objet à déplacer.
